# EUROPEAN PATENT APPLICATION

(11) **EP 4 629 415 A2**
(43) Date of publication of application: **08.10.2025**
(21) Application number: 25168465.0
(22) Date of filing: 04.04.2025
(51) Int. Cl.: H01M 50/209, H01M 50/507, H01M 50/519, H01M 50/517, H01M 50/55

(54) **BATTERY PACK**

(30) Priority: 05.04.2024 KR 20240046949; 01.04.2025 KR 20250042356
(71) Applicant: Samsung SDI Co., Ltd., Yongin-si, Gyeonggi-do 17084 (KR)
(72) Inventor: KIM, YOUNGDEOK, Yongin-si, Gyeonggi-do 17084 (KR)
(74) Representative: Gulde & Partner

(57) **Abstract**

A battery pack includes a connection member that is aligned with a bus bar to form a charge and discharge path for a group of battery cells forming the battery pack. A large conductive area is formed between the bus bar and the connection member. The configuration provides uniform contact resistance, thereby reducing the overall electrical resistance, suppressing the Joule heating, and reducing the risk of accidents, such as ignition and explosion, due to local Joule heating in a small conductive area.

## Description

### BACKGROUND

### 1. Field

One or more embodiments relate to a battery pack.

### 2. Description of the Related Art

Typically, secondary batteries are batteries that allow charging and discharging, unlike primary batteries that do not allow recharging. Secondary batteries may be used as an energy source for mobile devices, electric vehicles, hybrid vehicles, electric bicycles, and uninterruptible power supplies. Secondary batteries may be in the form of a single battery or in the form of a pack in which multiple batteries are connected and bundled into one unit, depending on the type of external device to which they are applied.

Small mobile devices, such as mobile phones, can operate for a certain period of time with the output and capacity of a single battery. When long-term operation or high-power operation is required, as in larger mobile devices such as laptops or electric or hybrid vehicles, that consume a lot of power, a pack containing multiple batteries is preferred due to issues with output and capacity. Depending on the number of built-in batteries, the output voltage or output current can be increased.

### SUMMARY

One or more embodiments include a battery pack in which a connection member is aligned with a bus bar to form a charge and discharge path for a group of battery cells forming the battery pack, with a large conductive area being provided between the bus bar and the connection member to thereby form a uniform contact resistance, reduce the overall electrical resistance, suppress the Joule heating, and reduce the risk of accidents such as ignition and explosion caused by local Joule heating in a small conductive area.

Additional aspects will be set forth in part in the description which follows and, in part, will be apparent from the description, or may be learned by practice of the presented embodiments of the present disclosure.

According to one or more embodiments, a battery pack includes a plurality of battery cells arranged inside a cell area in a first direction, a bus bar including an inner portion formed at a position inside the cell area, an outer portion formed at a position outside the cell area, and a connecting portion which connects the inner portion to the outer portion, fastening members fastened to nut members on an end block positioned at a position outside the cell area, each of the fastening members passing through a through hole formed on the outer portion of the bus bar, and position alignment guides that align the through holes of the bus bar and the nut members on the end block.

The inner portion of the bus bar is electrically connected to a first battery cell or a second battery cell positioned opposite to each other in a direction where the battery cells are connected and the outer portion of the bus bar is connected to a second connection member such that the bus bar forms a charge and discharge path for the plurality of battery cells.

The battery pack further includes a wiring board to which the inner portion of the bus bar and a connection member for electrically the plurality of the battery cells are coupled.

The wiring board extends in the first direction and in a second direction intersecting the first direction, and the wiring board faces the plurality of battery cells in a third direction intersecting the first and second directions, wherein the first direction is a long side direction and the second direction is a short side direction.

The position alignment guides include a first position alignment guide formed on the end block, and a second position alignment guide formed on the bus bar, wherein the first and second position alignment guides are fitted to each other in a third direction intersecting the first direction and a second direction in which electrode terminals of the battery cell are arranged.

The first position alignment guide is formed on the end block between a pair of nut members and the second position alignment guide is formed on the bus bar between a pair of through holes.

The first and second position alignment guides are fitted to each other in the third direction intersecting the first and second directions, and a wiring board to which the inner portion of the bus bar is coupled extends in the first and second directions, the first position alignment guide includes a protrusion protruding from the end block in the third direction, and the second position alignment guide includes a through hole formed in the bus bar.

The first position alignment guide is formed in the shape of a truncated rectangular pyramid, with the first position alignment guide having a rounded top that is narrow in a cross-sectional plane at the top, and with the first position alignment guide being wide in a cross-sectional plane at the base of the first position alignment guide.

The first position alignment guide includes a wide bottom in contact with the end block, a narrow top in a third direction that intersects the first and second directions, and slopes connecting the wide bottom to the narrow top.

The top and the bottom of the first position alignment guide and sections between the top and the bottom of the first position alignment guide each have a shape of a rectangular plane in cross-section with a long side extending in the first direction where the plurality of battery cells are arranged or in the second direction where the electrode terminals of each battery cell are arranged and with a short side extending in the second direction or in the first direction.

The top and the bottom of the first position alignment guide and sections between the top and the bottom of the first position alignment guide each have a shape of a rectangular plane in cross-section with the long side extending in the first direction where a long side of the wiring board to which the inner portion of the bus bar is coupled extends or the second direction where a short side of the wiring board to which the inner portion of the bus bar is coupled extends and with the short side extending in the second direction or the first direction.

The second position alignment guide is configured to passes by the top of the first position alignment guide and move along the slopes of the first position alignment guide from the narrow top to the wide bottom, and the second position alignment guide is configured to be loosely fitted to the first position alignment guide at the narrow top and tightly fitted to the first position alignment guide at the wide bottom to thereby align the first position alignment guide and the second position alignment guide.

The slopes include a front slope and a rear slope positioned opposite to each other in the first direction, each of the front slope and the rear slope including relatively gentle slopes with long sides in the first direction and the slopes include a left slope and a right slope positioned opposite to each other in the second direction, each of the left slope and the right slope including relatively steep slopes with short sides in the second direction.

A projection length of each of the front slope and the rear slope is a first maximum span such that the first position alignment guide forcibly corrects the position of the second position alignment guide in the first direction.

A projection length of each of the left slope and the right slope is a second maximum span such that the first position alignment guide forcibly corrects the position of the second position alignment guide in the second direction.

The first maximum span is greater than the second maximum span.

The inner portion of the bus bar extends to a position inside the cell area to form an electrical connection with a group of battery cells forming a parallel module with the first and second battery cells positioned opposite to each other in a direction where the battery cells are connected and the outer portion of the bus bar is positioned on the end block at a position outside the cell area and extends in the first direction, and the inner portion is longer than the outer portion.

The plurality of battery cells of the parallel module include a group of battery cells that are connected in parallel in the first direction as one unit and are arranged so that orientations of the electrode terminals of the battery cells are alternated left and right in the second direction intersecting the first direction.

The connecting portion of the bus bar is a stepped structure connecting the inner portion to the outer portion of the bus bar that are located at different levels in the third direction.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is an exploded perspective view of a battery pack according to embodiments of the present disclosure;
FIG. 2 is a plan view of the battery pack shown in FIG. 1;
FIG. 3 is a perspective view of a portion of the battery pack shown in FIG. 1 to explain the structure of position alignment guides that forcibly align the position of a bus bar and nut members;
FIGS. 4 and 5A are a perspective view and a plan view of a first position alignment guide formed on an end block, respectively;
FIG 5B is a cross-sectional view taken along the line Vb-Vb shown in FIG. 5A.
FIGS. 6A and 6B are cross-sectional views taken along line Vla-Vla in FIG. 4 and line Vlb-Vlb in FIG. 4, respectively;
FIG. 7 is a plan view of a second position alignment guide formed on a bus bar;
FIG. 8 is a diagram explaining a mechanism for forcibly moving a second position alignment guide toward a first position alignment guide, wherein the second position alignment guide moves from a top of the truncated first position alignment guide where fitting of the first and second position alignment guides begins (see (a)) toward a bottom thereof where fitting of the first and second position alignment guides ends (see (b)); and
FIG. 9 is a diagram showing an electrical connection between different first and second battery packs via a second connection member.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack according to embodiments of the present disclosure is described with reference to the drawings attached to the specification.

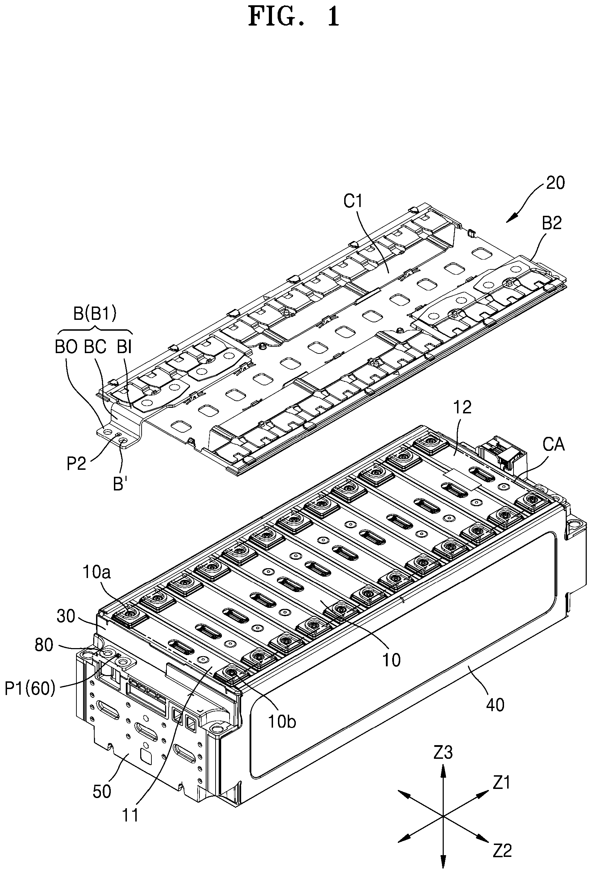

FIG. 1 is an exploded perspective view of a battery pack according to embodiments of the present disclosure.

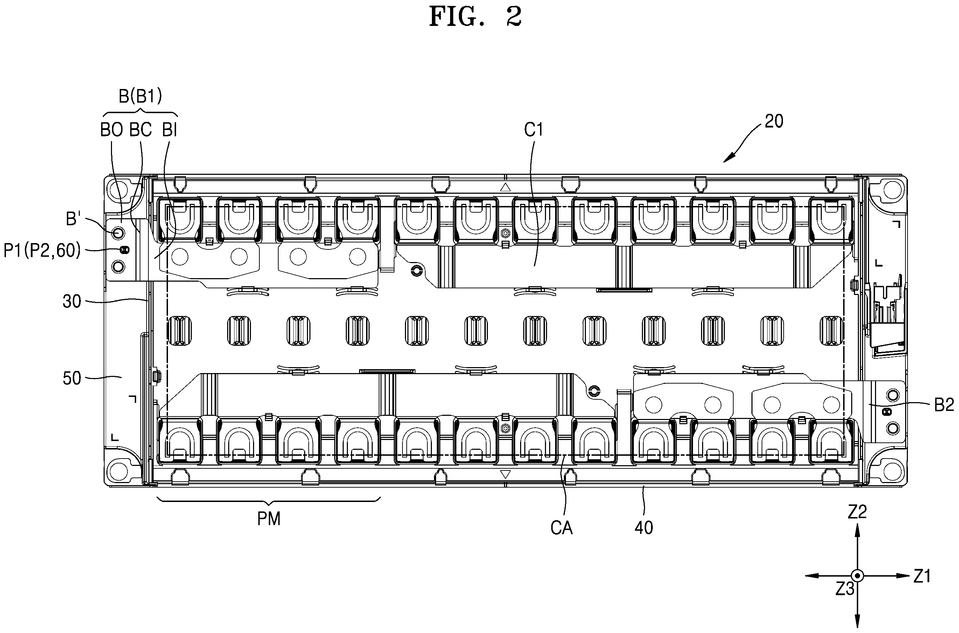

FIG. 2 is a plan view of the battery pack shown in FIG. 1.

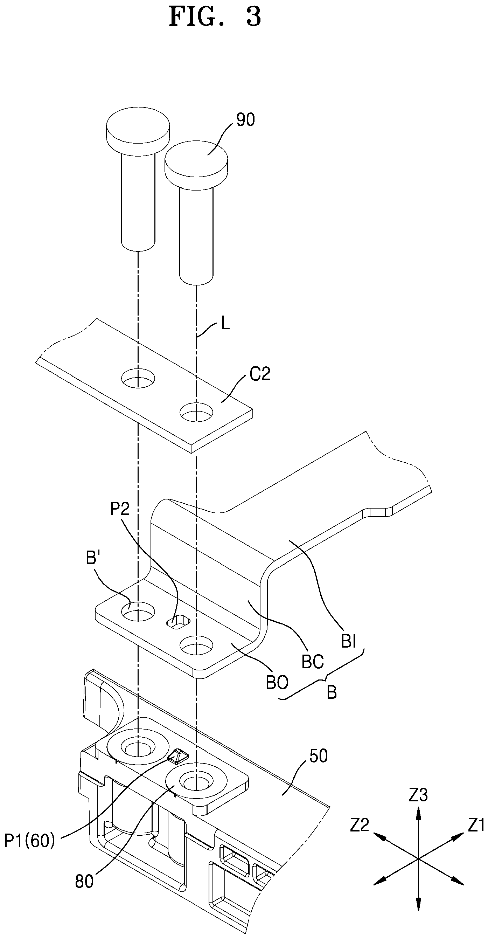

FIG. 3 is a perspective view of a portion of the battery pack shown in FIG. 1 to explain the structure of position alignment guides P1 and P2 that forcibly align the position of a bus bar B and nut members 80.

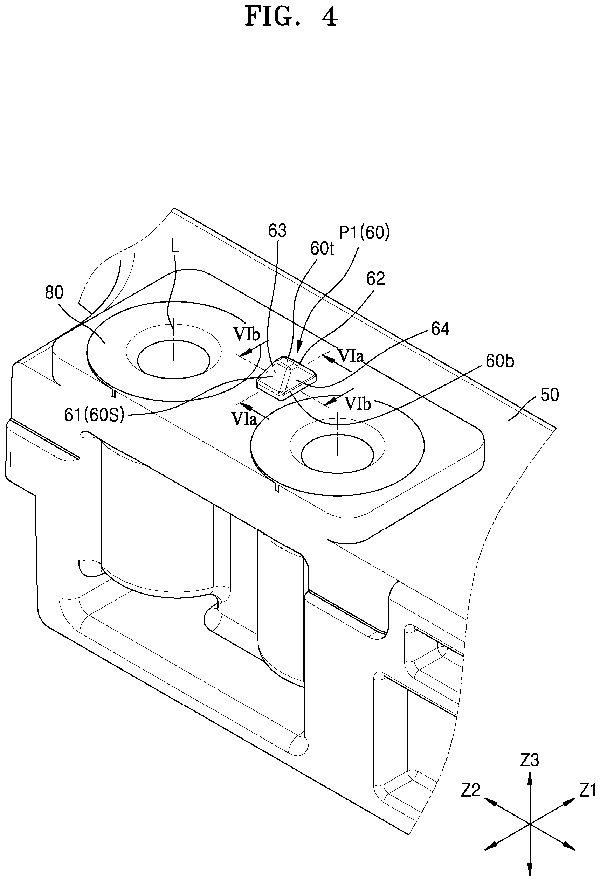

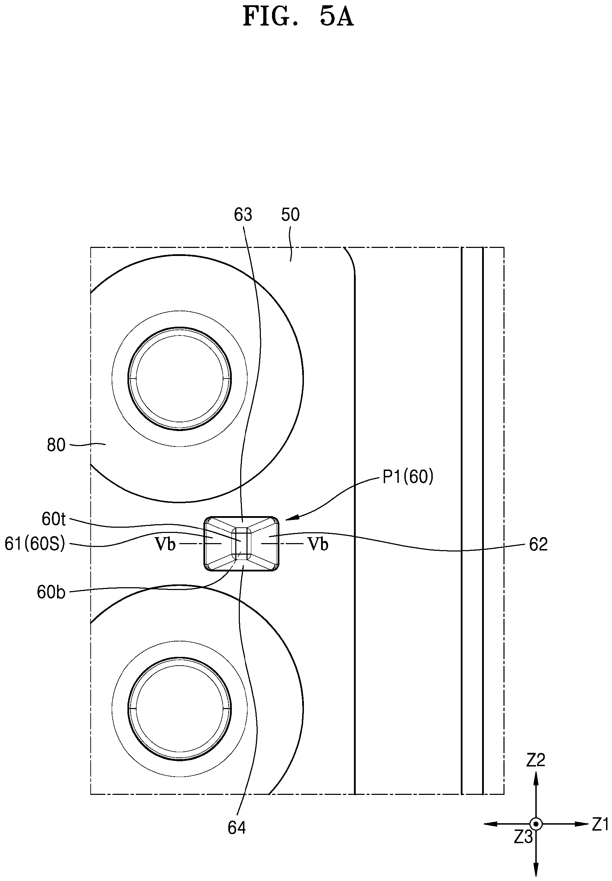

FIGS. 4 and 5A are a perspective view and a plan view of a first position alignment guide P1 formed on an end block 50, respectively.

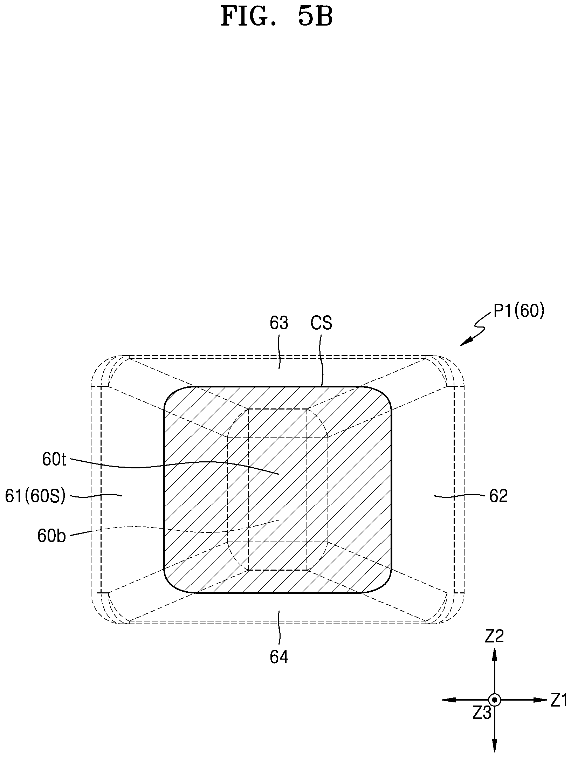

Referring to the FIGs 5A and 5B, in an embodiment of the present invention, the top 60t, the bottom 60b of the first alignment member P1 and the cross section of the first alignment member P1 crossing arbitrary slanted surface 60s between the top 60t and bottom 60b along the plane of first and second directions Z1, Z2, or the cross section of the first alignment member P1 at arbitrary level between the top 60t and bottom 60b along the plane of first and second directions Z1, Z2 might be formed in rectangular cross section shape with long side following the first direction where the plurality of the battery cells 10 are arranged and with short side following the second direction where the pair of electrodes are arranged, or in rectangular cross section shape with long side following the first direction where long side of the wiring substrate 20 coupled to inner portion BI of the bus bar B extends and with short side following the second direction where short side of the wiring substrate 20 extends. In an embodiment of the present invention, the cross section of the first alignment member P1 at arbitrary level along the height direction Z3 or the third direction Z3 between the top 60t and bottom 60b might be formed in rectangular shape with rounded corner in a way of chamfering rather than with acute corner for facilitating assembly between the first and second alignment members P1 and P2 to be fitted with each other with a guidance of rounded corner of the first alignment member P1 for position alignment between the first and second alignment members P1 and P2.

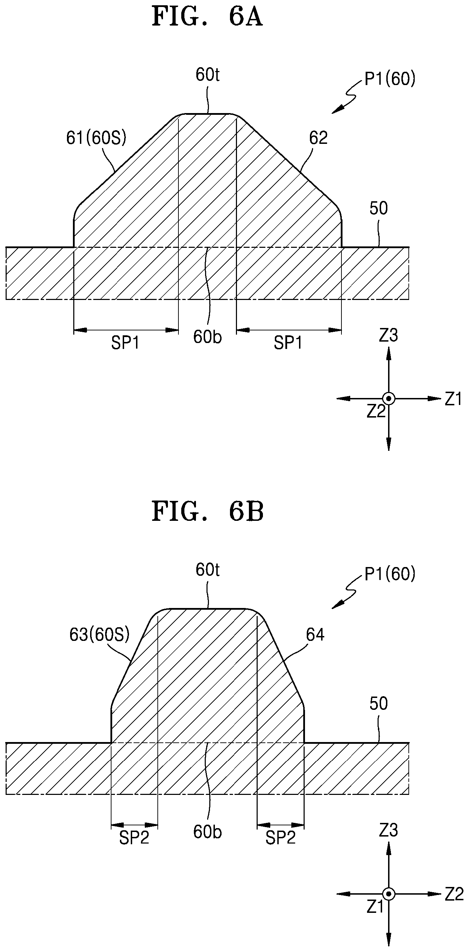

FIGS. 6A and 6B are cross-sectional views taken along line Vla-Vla in FIG. 4 and line Vlb-Vlb in FIG. 4, respectively.

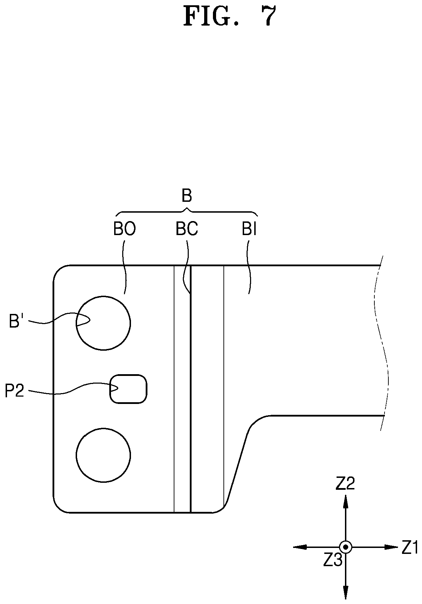

FIG. 7 is a plan view of a second position alignment guide P2 formed on a bus bar B.

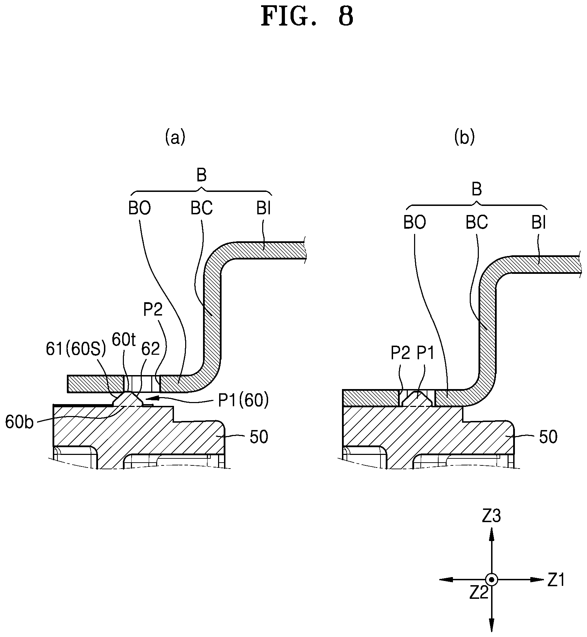

FIG. 8 is a diagram explaining a mechanism for forcibly moving a second position alignment guide P2 toward a first position alignment guide P2, wherein the second position alignment guide P2 moves from a top 60t of the truncated first position alignment guide P1 where fitting of the first and second position alignment guides P1 and P2 begins (see (a)) toward a bottom 60b thereof where fitting of the first and second position alignment guides P1 and P2 ends (see (b)).

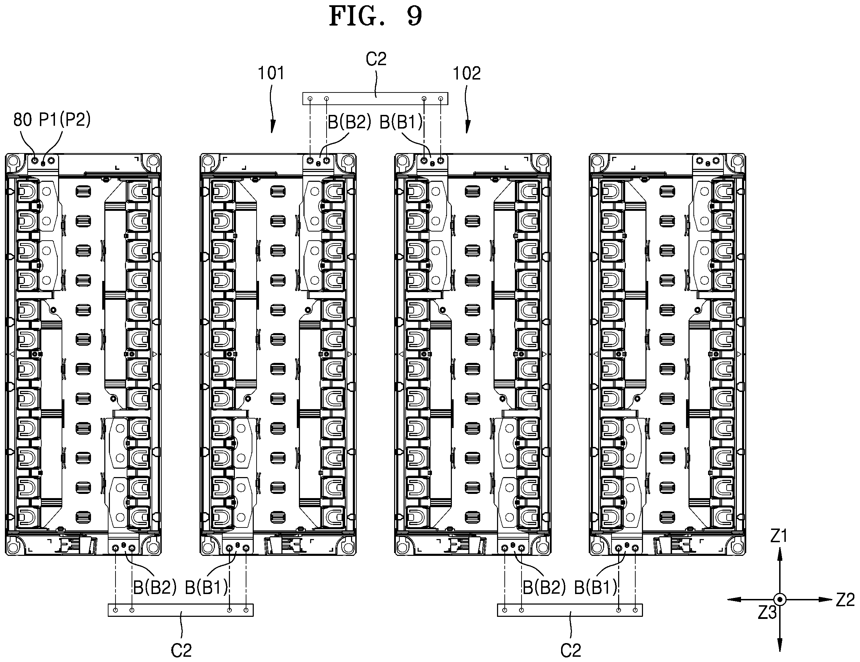

FIG. 9 is a diagram showing an electrical connection between different first and second battery packs 101 and 102 via a second connection member C2.

Referring to the drawings, a battery pack according to embodiments of the present disclosure may include a plurality of battery cells 10 arranged in a first direction Z1. A bus bar B includes an inner portion BI formed at a position inside a cell area CA where the plurality of battery cells 10 are arranged, an outer portion BO formed at a position outside the cell area CA where the plurality of battery cells 10 are arranged, and a connecting portion BC which connects the inner portion BI to the outer portion BO thereof. Fastening members 90 are fastened to nut members 80 on an end block 50 positioned at a position outside the cell area CA, with the fastening members 80 extending through through holes B' formed on the outer portion BO of the bus bar B. Position alignment guides P1 and P2 are provided for aligning the position of the through holes B' of the bus bar B and the nut members 80 on the end block 50.

The inner portion BI of the bus bar B, at a position inside the cell area CA where the plurality of battery cells 10 are arranged, may be electrically connected to a first battery cell 11 and a second battery cell 12 positioned opposite to each other in a direction where the battery cells 10 are connected. The outer portion BI of the bus bar B, at a position outside the cell area CA where the plurality of battery cells 10 are arranged, may be connected to a second connection member C2 that forms a charge and discharge path for the plurality of battery cells 10.

The battery pack may further include a wiring board 20 on which the inner portion BI of the bus bar B at a position inside the cell area CA is coupled to a first connection member C1 for electrically connecting the plurality of battery cells 10. The wiring board 20 may extend in a first direction Z1 where the plurality of battery cells 10 are arranged and a second direction Z2 intersecting the first direction Z1 and may face the plurality of battery cells 10 in a third direction Z3 intersecting the first and second directions Z1 and Z2, wherein the first direction Z1 is a long side direction and the second direction Z2 is a short side direction.

The position alignment guides P1 and P2 may include a first position alignment guide P1 formed on the end block 50, and a second position alignment guide P2 formed on the bus bar B. The first and second position alignment guides P1 and P2 may be fitted to each other in the third direction Z3.

The first position alignment guide P1 may be formed on the end block 50 between a pair of nut members 80 and

the second position alignment guide P2 may be formed on the bus bar B between a pair of through holes B'. The first and second position alignment guides P1 and P2 may be fitted to each other in the third direction Z3 intersecting the first and second directions Z1 and Z2 in which the wiring board 20 to which the inner portion BI of the bus bar B is coupled extends. The first position alignment guide P1 may include a protrusion 60 protruding from the end block 50 in the third direction Z3 and the second position alignment guide P2 may include through holes B' formed in the bus bar B.

The first position alignment guide P1 may be formed in the shape of a truncated rectangular pyramid with a rounded top having a narrow top plane and a wide base plane. The first position alignment guide P1 may include a wide bottom 60b in contact with the end block 50, a narrow top 60t facing the bottom 60b in the third direction Z3 intersecting the first and second directions Z1 and Z2 in which the wiring board 20 to which the inner portion BI of the bus bar B is coupled extends, and slopes 60S connecting the wide bottom 60b to the narrow top 60t.

The top 60t and the bottom 60b of the first position alignment guide P1 and the slopes 60S between the top 60t and the bottom 60b of the first position alignment guide P1 may each include a rectangular plane in which the first direction Z1 where the plurality of battery cells 10 are arranged and the second direction Z2 where the electrode terminals 10a and 10b of each battery cell 10 are arranged are a long side direction and a short side direction or a short side direction and a long side direction. Alternatively, a rectangular plane in which the first direction Z1 on the long side and the second direction Z2 on the short side, where the wiring board 20 to which the inner portion BI of the bus bar B is coupled extends, are a long side direction and a short side direction or a short side direction and a long side direction, respectively.

The second position alignment guide P2 that passes by the top 60t of the first position alignment guide P1 may move along the slopes 60S of the first position alignment guide P1 from the narrow top 60t to the wide bottom 60b thereof in the first direction Z1 and/or the second direction Z2. The second position alignment guide P2 may be loosely fitted to the first position alignment guide P1 at the narrow top 60t and tightly fitted to the first position alignment guide P1 at the wide bottom 60t, which thereby results in the alignment of the first position alignment guide P1 and the second position alignment guide P2.

A front slope 61 and a rear slope 62 positioned opposite to each other in the first direction Z1 may include relatively gentle slopes 60S with long sides in the first direction Z1 and a left slope 63 and a right slope 64 positioned opposite to each other in the second direction Z2 may include relatively steep slopes 60S with short sides in the second direction Z2. The first position alignment guide P1, in which a projection length of each of the front slope 61 and the rear slope 62 positioned opposite to each other in the first direction Z1 between the narrow top 60t and the wide bottom 60b in the first direction Z1 is a first maximum span SP1, may forcibly correct the position of the second position alignment guide P2 in the first direction Z1 with respect to the first position alignment guide P1. The first position alignment guide P1, in which a projection length of each of the left slope 63 and the right slope 64 positioned opposite to each other in the second direction Z2 between the narrow top 60t and the wide bottom 60b in the second direction Z2 is a second maximum span SP2, may forcibly correct the position of the second position alignment guide P2 in the second direction Z2 with respect to the first position alignment guide P1. The first maximum span SP1 where the position correction of the second position alignment guide P2 with respect to the first position alignment guide P1 in the first direction Z1 is allowed may be set to be greater than the second maximum span SP2 where the position correction of the second position alignment guide P2 with respect to the first position alignment guide P1 in the second direction Z2 is allowed.

The inner portion BI of the bus bar B may extend at a position inside the cell area CA to form an electrical connection with a group of battery cells 10 forming a parallel module PM with the first and second battery cells 11 and 12 positioned opposite to each other in a direction where the battery cells 10 are connected. The outer portion BO of the bus bar B positioned on the end block 50 at a position outside the cell area CA may extend in the first direction Z1.

The parallel module PM including the group of battery cells 10 connected in parallel in the first direction Z1 as one unit may be arranged so that the orientation of the electrode terminals 10a and 10b of each battery cell 10 is alternately reversed left and right in the second direction Z2 intersecting the first direction Z1.

The connecting portion BC of the bus bar B may be formed in a stepped structure to connect the inner portion BI to the outer portion BO of the bus bar B which are located at different levels in the third direction Z3 where the bus bar B faces the battery cells 10.

The battery pack according to embodiments of the disclosure may include the plurality of battery cells 10 arranged in the first direction Z1 and the first connecting member C1 positioned at a position inside the cell area CA where the plurality of battery cells 10 are arranged to electrically connect different battery cells 10 among the plurality of battery cells 10. The battery pack may further include the bus bar B connected to the first and second battery cells 11 and 12 positioned opposite to each other for the electrical connection of the plurality of battery cells 10 formed through the first connection member C1 at a position inside the cell area CA where the plurality of battery cells 10 are arranged. The bus bar B may also be connected to the second connection member C2 at a position outside the cell area CA where the plurality of battery cells 10 are arranged, thereby forming a charge and discharge path for the plurality of battery cells 10. More specifically, the bus bar B may include the inner portion BI positioned at a position inside the cell area CA, the outer portion BO positioned at a position outside the cell area CA, and the connecting portion BC that connects the inner portion BI located at a position inside the cell area CA to the outer portion BO located at a position outside the cell area CA. The inner portion BI of the bus bar B at a position inside the cell area CA may be connected to the first and second battery cells 11 and 12 positioned opposite to each other for the electrical connection of the plurality of battery cells 10 and the outer portion BO of the bus bar B at a position outside the cell area CA may be connected to the second connection member C2 forming a charge and discharge path for the plurality of battery cells 10.

The bus bar B for forming a charge/discharge path through which the charge/discharge current of the battery pack is communicated may be connected to the first and second battery cells 11 and 12 positioned opposite to each other for the electrical connection of the plurality of battery cells 10 forming the battery pack. -To provide a battery pack where the plurality of battery cells 10 are electrically connected, the bus bar B connected to the battery cells 10 opposite to each other forming the highest or lowest potential for the electrical connection of the plurality of battery cells 10 which are electrically connected through the first connection member C1 may form a charging/discharging path for the entire battery pack and provide an input point for charging current and an output point for discharging current. According to embodiments of the present disclosure, the first connection member C1 may refer to a connection member that electrically connects different battery cells 10 and is positioned at a position inside the cell area CA where the plurality of battery cells 10 forming the battery pack are arranged, e.g., a connection member connecting different battery cells 10 forming the same battery pack. As described below, the second connection member C2 may refer to a connection member that connects different battery packs and is positioned at a position outside the cell area CA where the plurality of battery cells 10 forming the battery pack are arranged, e.g., a connection member forming an electrical connection between the different battery cells 10 forming different battery packs.

The bus bar B connected to the first and second battery cells 11 and 12 positioned opposite to each other for the electrical connection of the plurality of battery cells 10 forming the battery pack may form a charging/discharging path for electrical input and output of the battery pack. The bus bar B may include first and second bus bars B1 and B2 electrically connected to the first and second battery cells 11 and 12 opposite to each other, respectively, for the electrical connection of the plurality of battery cells 10. Throughout this disclosure, the "bus bar B" may refer to the first and second bus bars B1 and B2 or may refer to any one bus bar B of the first and second bus bars B1 and B2. If the bus bar B is electrically connected to the battery cells 10 opposite to each other for the electrical connection of the plurality of battery cells 10, the battery cells 10 opposite to each other may include a first battery cell 11 at one end and a second battery cell 12 at the other end in an electrical connection direction of the battery cells 10. According to some embodiments, the battery cells 10 opposite to each other may refer to either the first battery cell 11 at one end or the second battery cell 12 at the other end for the electrical connection of the plurality of battery cells 10. According to embodiments of the present disclosure, for the electrical connection of the plurality of the battery cells 10 forming the battery pack, the first battery cell 11 at one end in an electrical connection direction of the battery cells 10 may correspond to the battery cell 10 with the highest potential or the battery cell 10 with the lowest potential among the plurality of battery cells 10. The second battery cell 12 at the other end in an electrical connection direction of the battery cells 10 may correspond to the battery cell 10 with the highest potential or the battery cell 10 with the lowest potential among the plurality of battery cells 10. And the first and second battery cells 11 and 12 may correspond to one battery cell 10 and the other battery cell 10 among the battery cell 10 with the highest potential and the battery cell 10 with the lowest potential.

According to embodiments of the present disclosure, the first and second battery cells 11 and 12 may refer to battery cells 10 connected to each other at both ends in an electrical connection direction of the plurality of battery cells 10 forming the battery pack. The first and second battery cells 11 and 12 may also refer to battery cells 10 with the highest and lowest potentials, respectively, among the plurality of electrically connected battery cells 10 or may collectively refer to a group of battery cells 10 with the highest and lowest potentials rather than a single battery cell 10. According to embodiments of the present disclosure, at least one battery cell 10 among a group of battery cells 10 with equal highest potentials or equal lowest potentials may be referred to as the first and second battery cells 11 and 12.

According to embodiments of the present disclosure, the plurality of battery cells 10 forming the battery pack may be arranged in the first direction Z1 and the plurality of battery cells 10 arranged in the first direction Z1 may be electrically connected to each other in the first direction Z1 through the first connection member C1. The first direction Z1 may correspond to both the arrangement direction and an electrical connection direction of the plurality of battery cells 10. According to embodiments of the present disclosure, the plurality of battery cells 10 may be electrically connected to each other using a series-parallel mixed method in which different parallel modules PM each formed by a group of battery cells 10 connected in parallel are connected in series. According to embodiments of the present disclosure, the parallel modules PM adjacent to each other in the first direction Z1 may form a series connection while four battery cells 10 adjacent to each other form a parallel module PM in the first direction Z1, thereby forming a 3S4P connection through this series-parallel mixed method. The first and second battery cells 11 and 12 collectively refer to parallel modules PM (each formed by four battery cells 10) positioned opposite to each other in the first direction Z1 where the plurality of battery cells 10 are arranged or at least one battery cell 10 of the parallel modules PM (each formed by four battery cells 10) positioned opposite to each other in the first direction Z1. As described below, the bus bar B connected to the first and second battery cells 11 and 12 at a position inside the cell area CA may be electrically connected to all battery cells 10 (e.g., four battery cells 10) forming the parallel module PM or may be electrically connected to at least one battery cell 10 forming the parallel module PM. According to embodiments of the present disclosure, to increase a conductive area between the bus bar B and the first and second battery cells 11 and 12 and to reduce resistance loss, a collective connection may be formed between the bus bar B and the group of parallel modules PM forming the first and second battery cells 11 and 12. For example, the inner portion BI of the bus bar B may form an electrical connection with each of the group of battery cells 10 forming the parallel module PM.

According to embodiments of the present disclosure, by connecting at a position inside of the cell area CA to the at a position outside of the cell area CA, the bus bar B may form an electrical connection between the plurality of battery cells 10 electrically connected to each other through the first connection member C1 positioned at a position inside the cell area CA and the second connection member C2 positioned at a position outside the cell area CA.

To form an electrical connection between the first and second battery cells 11 and 12 positioned at a position inside the cell area CA and the second connection member C2 positioned at a position outside the cell area CA, the bus bar B may include the inner portion BI connected to the first and second battery cells 11 and 12 and the outer portion BO connected to the second connection member C2. According to embodiments of the present disclosure, the inner portion BI of the bus bar B may be connected to the first and second battery cells 11 and 12 opposite to each other for the electrical connection of the plurality of battery cells 10. According to embodiments of the present disclosure, the plurality of battery cells 10 forming the battery pack may be electrically connected to each other in the first direction Z1 where the battery cells 10 are arranged as an electrical connection direction of the battery cells 10. In this configuration, the first and second battery cells 11 and 12 opposite to each other in the first direction Z1 where the plurality of battery cells 10 are electrically connected may correspond to the first and second battery cells 11 and 12 arranged opposite to each other in the first direction Z1. The first and second battery cells 11 and 12 connected to the inner portion BI of the bus bar B may be positioned opposite to each other in the first direction Z1 where the plurality of battery cells 10 forming the battery pack are arranged. The bus bar B may extend from the inner portion BI of the bus bar B connected to the first and second battery cells 11 and 12 positioned opposite to each other in the first direction Z1 where the battery cells 10 are arranged toward the end block 50 positioned at a position outside the cell area CA. The bus bar B may also include the outer portion BO on the end block 50, wherein the outer portion BO of the bus bar B may be connected to the second connection member C2 on the end block 50. For example, the bus bar B may include the inner portion BI electrically connected to the first and second battery cells 11 and 12 at a position inside the cell area CA, the outer portion BO electrically connected to the second connection member C2 at a position outside the cell area CA, and the connecting portion BC between the inner portion BI and the outer portion BO of the bus bar B. According to embodiments of the present disclosure, the inner portion BI of the bus bar B may form an electrical connection with the first and second battery cells 11 and 12 at a position inside the cell area CA, e.g., an electrical connection with the group of parallel modules PM forming the first and second battery cells 11 and 12. Thus, the bus bar B may be formed relatively long in the first direction Z1 to form an electrical connection with the group of battery cells 10 forming the parallel module PM in the first direction Z1. The outer portion BO of the bus bar B, which extends to a position outside of the cell area CA where the plurality of battery cells 10 are arranged and is positioned on the end block 50, may be formed relatively short in the first direction Z1.

According to embodiments of the present disclosure, the connecting portion BC of the bus bar B which connects the inner portion BI at a position inside the cell area CA (where the first and second battery cells 11 and 12 are arranged) to the outer portion BO at a position outside the cell area CA (where the end block 50 is located) may have a stepped structure for connecting the inner portion BI to the outer portion BO that are arranged at different levels in the third direction Z3 intersecting the first direction Z1 and the second direction Z2. For example, the connecting portion BC of the bus bar B may have a stepped structure for bridging the height difference between the relatively high level of the battery cells 10 or an end plate 30 placed at a position outside the battery cells 10 and the relatively low level of the end block 50.

According to embodiments of the present disclosure, the battery pack may further include the wiring board 20 on which the inner portion BI of the bus bar B positioned inside the cell area CA is coupled to the first connection member C1 for electrically connecting the plurality of battery cells 10. The wiring board 20 on which the first connection member C1 for electrically connecting different battery cells 10 and the inner portion BI of the bus bar B are integrally coupled may be positioned above the battery cells 10. The wiring board 20 may facilitate the positional alignment between the plurality of battery cells 10 and the bus bar B and the first connection member C forming an electrical connection with the battery cells 10 by integrally forming the first connection member C1 for forming an electrical connection between different battery cells 10 and the bus bar B. Thus, the wiring board provides for a charge and discharge path for the electrical input and output of the plurality of battery cells 10 electrically connected to each other through the first connection member C1. By arranging the wiring board 20 on which the first connection member C1 and the bus bar B are integrally formed above the plurality of battery cells 10 structurally bound to each other through the end block 50 and the end plate 30, electrical connection points between each battery cell 10 and the first connection member C1 and the bus bar B are aligned, thereby facilitating an electrical connection therebetween. All of the electrical connections with the plurality of battery cells 10 may be integrally formed on the wiring board 20. Measurement wiring (not shown) for obtaining measurement signals from the plurality of battery cells 10 may also be formed together with the first connection member C1 for electrically connecting the plurality of battery cells 10 and the bus bar B connected to the first and second battery cells 11 and 12. The measurement wiring (not shown) may include a branch portion connected to the electrode terminals 10a and 10b of the plurality of battery cells 10 arranged in the first direction Z1 or to the first connection member C1 connected to the electrode terminals 10a and 10b and a body portion for transmitting the measurement signals collected from the branch portion toward a circuit board.

The wiring board 20 may include a base board for providing electrical connections, such as the first connection member C1, the bus bar B, and measurement wiring, and a support base for these different electrical connections. The base board may be formed of a flexible film-type flexible board rather than a rigid board. In this regard, a plurality of electrical connections formed on the base board may be flexibly aligned with each connection point. The connection points with each battery cell 10 may be aligned in a uniform manner through deformation of the base board on which the plurality of electrical connections are formed.

The wiring board 20 may extend in the first and second directions Z1 and Z2 and face the plurality of battery cells 10 in the third direction Z3 intersecting the first and second directions Z1 and Z2, wherein the first direction Z1 where the plurality of battery cells 10 are arranged is a long side direction and the second direction Z2 intersecting the first direction Z1 is a short side direction. Throughout this disclosure, the first direction Z1 may refer to a direction where the plurality of battery cells 10 are arranged, a direction where the plurality of battery cells 10 are electrically connected to each other, or an arrangement direction of the parallel modules PM each formed by the group of battery cells 10 connected in parallel with each other. The second direction Z2 may refer to a direction where different electrode terminals 10a and 10b are arranged in each battery cell 10 and may also refer to a short side direction among the short side direction and the long side direction of the wiring board 20 on which the first connection member C1 is coupled to the inner portion BI of the bus bar B at a position inside the cell area CA where the plurality of battery cells 10 are arranged.

The plurality of battery cells 10 forming the battery pack may be structurally bound by being surrounded by a pair of end plates 30 opposite to each other in the first direction Z1 and a pair of side plates 40 opposite to each other in the second direction Z2. The pair of end blocks 50 may be positioned at a position outside the pair of end plates 30 in the first direction Z1. The position of the pair of end blocks 50 may correspond to a location outside the cell area CA where the plurality of battery cells 10 are arranged. The outer portion BO of the bus bar B extending from the inner portion BI at a position inside the cell area CA to a location outside the cell area CA may be electrically connected to the second connection member C2 on the end block 50 formed at a position outside the cell area CA.

Fastening members 90 may be fastened to the nut members 80 on the end block 50 at a position outside the cell area CA by the fastening members 90 passing through the through holes B' formed in the outer portion BO of the bus bar B on the end block 50. The through holes B' of the bus bar B may be fitted to the nut members 80 on the end block 50 with respect to the position alignment guides P1 and P2 for aligning the position between the through holes B' and the nut members 80.

The position alignment guides P1 and P2 may include the first position alignment guide P1 formed on the end block 50 and the second position alignment guide P2 formed on the bus bar B, wherein the first and second position alignment guides P1 and P2 may be fitted to each other in the third direction Z3. that is, the first and second positioning guides P1 and P2 may be fitted to each other in the third direction Z3 intersecting the first and second directions Z1 and Z2 in which the long and short sides of the wiring board 20 to which the inner portion BI of the bus bar B is coupled extend, respectively. The first position alignment guide P1 may include a protrusion 60 protruding from the end block 50 in the third direction Z3 and the second position alignment guide P2 may include the through holes B' formed in the bus bar B. The first position alignment guide P1 may be formed on the end block 50 between the pair of nut members 80 and the second position alignment guide P2 may be formed on the bus bar B between the pair of through holes B'.

Using the position alignment guides P1 and P2, the position of the outer portion BO of the bus bar B may be aligned on the end block 50. More specifically, the outer portion BO of the bus bar B may be aligned with the nut members 80 formed on the end block 50 and may be fastened to the nut members 80 on the end block 50 along a fastening line L as the fastening members 90 are fastened to the nut members 80 on the end block 50 through the through holes B' formed in the outer portion BO of the bus bar B. The outer portion BO of the bus bar B, specifically, the through holes B' formed in the outer portion BO of the bus bar B, may be aligned along the fastening line L onto which the nut members 80 of the end block 50 are projected, and may be fastened to the nut members 80 on the end block 50 along the fastening line L.

The positional alignment between the through hole B' formed on the outer portion BO of the bus bar B and the nut member 80 on the end block 50 may mean that the through hole B' is fitted to the nut member 80 in a state in which the center of the through hole B' formed in the outer portion BO of the bus bar B and the center of the nut member 80 on the end block 50 are aligned with each other, i.e., a state in which the center of the through hole B' formed in the outer portion BO of the bus bar B and the center of the nut member 80 on the end block 50 are aligned along substantially the same fastening line L. As such, by aligning the center of the through holes B' of the bus bar B through which the fastening members 90 pass with the centers of the nut members 80 on the end block 50, the verticality of the fastening members 90 passing through the nut members 80 may be maintained along the fastening line L. As the fastening force acting between the fastening member 90 and the nut member 80 is not biased in any one direction along the periphery of the fastening line L due to the verticality of the fastening member 90 and a uniform fastening pressure is provided along the periphery of the fastening line L, a uniformly large conductive area may be formed along the periphery of the fastening line L between the bus bar B and the second connection member C2 arranged to overlap each other between the fastening member 90 and the nut member 80. By forming a relatively large conductive area, Joule heating may be suppressed while reducing the resistance loss of the charging and discharging power of the high voltage and high current communicated by the bus bar B and the second connection member C2. Thus, high local Joule heat may not be caused, thereby reducing the risk of accidents, such as ignition and explosion, due to local high Joule heat.

If the center of the through hole B' of the bus bar B through which the fastening member 90 passes and the nut member 80 on the end block 50 are aligned along the fastening line L, the center of the through hole B' of the bus bar B may be offset from the nut member 80. In such a case, although the fastening member 90 passes through the through hole B' of the bus bar B and the nut member 80 on the end block 50, the through hole B' of the bus bar B and the nut member 80 on the end block 50 which have the offset centers may bias the verticality of the fastening member 90 from the vertical fastening line L. The fastening force between the fastening member 90 inclined diagonally from the vertical fastening line L projected from the nut member 80 on the end block 50 may not form a uniform fastening pressure along the periphery of the fastening line L and may provide a biased fastening pressure in any one direction along the periphery of the fastening line L, thereby forming a narrowly confined conductive area between the bus bar B and the second connection member C2 overlapping with each other between the fastening member 90 and the nut member 80. Thus, due to such a narrowly confined conductive area between the bus bar B and the second connection member C2, resistance loss of the charging and discharging power of the high voltage and high current communicated by the bus bar B and the second connection member C2 may be caused and local high Joule heating may be caused, thereby increasing the risk of accidents, such as ignition and explosion, due to local high Joule heat. Such problems are avoided with embodiments of the disclosure wherein the by aligning the center of the through holes B' of the bus bar B through which the fastening members 90 pass with the centers of the nut members 80 on the end block 50, the verticality of the fastening members 90 passing through the nut members 80 may be maintained along the fastening line L.

According to embodiments of the present disclosure, the fastening member 90 may be fastened to the nut member 80 by sequentially passing through the through hole B' of the bus bar B and the nut member 80 on the end block 50 having offset centers but certain tolerances. In this case, the axis of the fastening member 90 may be biased from the fastening line L projected vertically from the nut member 80 on the end block 50 while passing through the through hole B' of the bus bar B and the nut member 80 on the end block 50. If the verticality of the fastening member 90 is not maintained and the fastening member 90 is biased from the fastening line L, the fastening force between the biased fastening member 90 and the nut member 80 may provide uneven fastening pressure along the periphery of the fastening line L and may cause the conductive area between the bus bar B and the second connection member C2, which overlap with each other between the fastening member 90 and the nut member 80, to be narrow and local. Due to the narrow and local conductive area, resistance loss of charging and discharging power and high Joule heating may be caused, thereby increasing the risk of accidents, such as ignition and explosion. Such potential problems are avoided with embodiments of the disclosure. For example, by forming a uniform fastening pressure between the bus bar B and the second connection member C2 and forming a large conductive area with a uniform fastening pressure for the electrical connection between the second connection member C2 and the bus bar B forming a charge and discharge path, there is a reduced resistance loss in the charge and discharge path and the risk of ignition and explosion due to local Joule heating may be eliminated. This is because of the positional alignment provided between the fastening members 90 and the nut members 80, which provide a fastening pressure between the bus bar B and the second connecting member C2, may be provided and the position alignment of the fastening members 90 with respect to the nut members 80 or the position alignment between the nut members 80 and the through holes B' of the bus bar B through which the fastening members 90 sequentially pass so as to be fastened to the nut member 80.

The position alignment between the through holes B' of the bus bar B and the nut members 80 formed on the end block 50 may be achieved by using the position alignment guides P1 and P2 formed on the bus bar B and the end block 50, respectively. The position alignment guides P1 and P2 may include the first position alignment guide P1 formed on the end block 50 adjacent to the nut members 80 and the second position alignment guide P2 formed on the bus bar B adjacent to the through holes B'.

The first and second position alignment guides P1 and P2 formed on the end block 50 adjacent to the nut members 80 and the bus bar B adjacent to the through holes B' may be configured to forcibly move the position of the bus bar B to the correct position on the end block 50 on which the nut members 80 are formed. For example, the first and second position alignment guides P1 and P2 may forcibly move the position of the through holes B' of the bus bar B to the correct position to change a misaligned state of the nut members 80 on the end block 50 and the through holes B' of the bus bar B to an aligned state. For example, through the position alignment guides P1 and P2, the through holes B' of the bus bar B may be forcibly moved to the correct position on the nut members 80 on the end block 50, with the centers of the through holes B' of the bus bar B being forcibly aligned with the centers of the nut members 80 on the end block 50 along the fastening line L. That is, rather than simply confirming the position alignment between the through holes B' of the bus bar B and the nut members 80 on the end block 50, the position alignment guides P1 and P2 for forcibly moving the through holes B' of the bus bar B to the correct position on the nut members 80 on the end block 50 may function as a guide to forcibly move the through holes B' of the bus bar B toward the correct position on the nut members 80 on the end block 50. Moreover, the position alignment guides P1 and P2 may forcibly aligning the position of the through holes B' of the bus bar B and the nut members 80 by forcibly moving the position of the through holes B' of the bus bar B to the correct position on the nut members 80 using the ductility of the wiring board 20 on which the bus bar B is integrally formed.

The first position alignment guide P1 may be formed on the end block 50 in which the nut members 80 are formed. The first position alignment guide P1 may be formed as a protrusion 60 protruding from a position adjacent to the nut members 80 formed on the end block 50. The first position alignment guide P1 as a protrusion 60 protruding from the end block 50 may be formed in the shape of a truncated rectangular pyramid with a rounded top. That is, the first position alignment guide P1 may be formed in the shape of a truncated rectangular pyramid including a wide bottom and a narrow top, wherein the top thereof is rounded. More specifically, the first position alignment guide P1 may include the wide bottom 60b in contact with the end block 50, the narrow top 60t opposite to the bottom 60b in the third direction Z3 intersecting the first and second directions Z1 and Z2 in which the wiring board 20 to which the inner portion BI of the bus bar B is coupled extends. The slopes 60S may connect the narrow top 60t to the wide bottom 60b thereof. In particular, the slopes 60S may form side surfaces of the first position alignment guide P1 and may be inclined from the bottom 60b toward the top 60t thereof.

According to embodiments of the present disclosure, the top 60t and the bottom 60b of the first position alignment guide P1 and the slopes 60S between the top 60t and the bottom 60b of the first position alignment guide P1 may each be formed as a rectangular plane (rectangular section) in which the first direction Z1 where the plurality of battery cells 10 are arranged and the second side direction Z2 where the electrode terminals 10a and 10b of each battery cell 10 are arranged as a long side direction and a short side direction or a short side direction and a long side direction, respectively. According to other embodiments of the present disclosure, the top 60t and the bottom 60b of the first position alignment guide P1 and the slopes 60S between the top 60t and the bottom 60b of the first position alignment guide P1 may each be formed as a rectangular plane (rectangular section) in which the first direction Z1 on the long side and the second direction Z2 on the short side, where the wiring board 20 to which the inner portion BI of the bus bar B is coupled extends, are a long side direction and a short side direction or a short side direction and a long side direction, respectively. The first position alignment guide P1 may have a variable section dimension in the third direction Z3 protruding from the end block 50 and each section formed along the planes in the first and second directions Z1 and Z2 intersecting the third direction Z3 may include a long side in the first direction Z1 or in the second direction Z2 and a short side in the second direction Z2 or in the first direction Z1, thereby forming a rectangular plane (rectangular section).

The first and second positioning guides P1 and P2 may be fitted to each other in the third direction Z3 which is a fitting direction. For example, as the second position alignment guide P2 slides along the slopes 60S of the first position alignment guide P1, e.g., as the second position alignment guide P2 slides along the slopes 60S connecting the top 60t to the bottom 60b of the first position alignment guide P1 from the position of the top 60t toward the position of the bottom 60b thereof, the second position alignment guide P2 fitted to the top 60t of the first position alignment guide P1 may move from the narrow top 60t to the wide bottom 60b thereof in the first and second directions Z1 and Z2. Thus, the first and second position alignment guides P1 and P2 at first loosely fitted to each other at the narrow top 60t may become tightly fitted to each other at the wide bottom 60b, resulting in the position alignment of the first and second position alignment guides P1 and P2.

From the wide bottom 60b in contact with the end block 50 to the narrow top 60t thereof in the third direction Z3, a cross-sectional area of the first position alignment guide P1 in the first and second directions Z1 and Z2 may gradually decreases at different levels in the third direction Z3 and a cross-sectional area thereof may decrease in the third direction Z3 from the end block 50. In other words, a cross-sectional area of the first position alignment guide P1 may gradually increase from the narrow top 60t to the wide bottom 60b thereof.

The second position alignment guide P2 may be easily fitted to the first position alignment guide P1 through the loose fit at the top 60t of the first position alignment guide P1 and may be aligned with the first position alignment guide P1 through the tight fit bottom 60b thereof. The second position alignment guide P2 may be aligned with the first position alignment guide P1 by sliding along the inclined slopes 60S from the narrow top 60t to the wide bottom 60b of the first position alignment guide P1. The second position alignment guide P2 may be easily fitted to the first position alignment guide P1 through the loose fit at the top 60t of the first position alignment guide P1 where the fitting thereof begins in the fitting direction where the second position alignment guide P2 is fitted to the first position alignment guide P1. Although the second position alignment guide P2 is easily fitted to the first position alignment guide P1 through the loose fit at the top 60t of the first position alignment guide P1 without the position alignment, the second position alignment P2 may be aligned with the first position alignment guide P1 through the tight fit at the bottom 60b of the first position alignment guide P1 where the fitting thereof ends.

As the second position alignment guide P2 slides along the slopes 60S of the first position alignment guide P1, i.e., as the second position alignment guide P2 slides from the position of the top 60t where fitting with the first position alignment guide P1 begins to the position of the bottom 60b where fitting therewith ends, the second position alignment guide P2 may be forcibly moved to a position where the second position alignment guide P2 is aligned with the first position alignment guide P1 and the second position alignment guide P2 may be forcibly moved to a correct position where the second position alignment guide P2 is aligned with the first position alignment guide P1 in the first and second directions Z1 and Z2. As such, the forced position movement of the second position alignment guide P2 through the fitting of the first and second position alignment guides P1 and P2 may include positional movement in the first direction Z1, positional movement in the second direction Z2, and positional movement in the first and second directions Z1 and Z2. The forced positional movement of the second position alignment guide P2 through fitting of the first and second position alignment guides P1 and P2 may refer to a span over which the position correction of the second position alignment guide P2 is allowed through fitting of the first and second position alignment guides P1 and P2. The forced positional movement of the second position alignment guide P2 may refer to a size of positional misalignment of the first and second position alignment guides P1 and P2 before fitting thereof, which can be corrected by moving the second position alignment guide P2 before fitting thereof to the position of the first position alignment guide P1 which is the correct position, to align the second position alignment guide P2 with the first position alignment guide P1 by correcting the positional misalignment of the first and second position alignment guides P1 and P2 before fitting.

In the forced positional movement of the second position alignment guide P2 in the first and second directions Z1 and Z2, the second position alignment guide P2 having an initial position within the maximum span may be forcibly moved in the first and second directions Z1 and Z2 to be aligned to the correct position of the first position alignment guide P1, wherein the maximum span is a projection length of the slope 60S spanning from the narrow top 60t to the wide bottom 60b in the fitting direction with the first position alignment guide P1.

The position correction between the first and second position alignment guides P1 and P2 may be made from a position biased to one side in the first and second directions Z1 and Z2 or from a position biased to the other side. The position correction may be made while the second position alignment guide P2 moves from one or the other side along the slope 60S of the first position alignment guide P1. For example, if the position correction from the position biased to one side in the first direction Z1 is needed, e.g., if the second position alignment guide P2 is biased from the position of the first position alignment guide P1 which is the correct position to one side, e.g., the rear side among a front side and a rear side in the first direction Z1, the second position alignment guide P2 may slide along the front slope 61 among the slopes 60S on both sides in the first direction Z1 and may be forcibly moved to the correct position of the first position alignment guide P1 as being pressed from the position relatively biased to the rear side toward the front side. As the second position alignment guide P2 slides along the front slope 61 of which the projection length is the maximum span (first maximum span SP1), i.e., the projection length where the front slope 61 extends in the first direction Z1 is the maximum span (first maximum span SP1), the second position alignment guide P2 may be aligned with the first position alignment guide P1 through the pressure toward the front side. If the second position alignment guide P2 is biased from the position of the first position alignment guide P1 which is the correct position to the front side in the first direction Z1, the second position alignment guide P2 may slide along the rear slope 62 among the slopes 60S on both sides in the first direction Z1 and may be forcibly moved to the correct position of the first position alignment guide P1 as being pressed from the position relatively biased to the front side toward the rear side. As the second position alignment guide P2 slides along the rear slope 62 of which the projection length is the maximum span (first maximum span SP1), i.e., the projection length where the rear slope 62 extends in the first direction Z1 is the maximum span (first maximum span SP1), the second position alignment guide P2 may be aligned with the first position alignment guide P1 through the pressure toward the rear side. As such, the projection length in the first direction Z1 of the slopes 60S (front slope 61 and rear slope 62) opposite to each other in the first direction Z1 may define the maximum span (first maximum span SP1) over which the position correction of the second position alignment guide P2 in the first direction Z1 is allowed. Similarly, the projection length in the second direction Z2 of the slopes 60S (left slope 63 and right slope 64) opposite to each other in the second direction Z2 may define the maximum span (second maximum span SP2) over which the position correction of the second position alignment guide P2 in the second direction Z2 is allowed.

The first maximum span SP1 that allows the position correction in the first direction Z1 may be greater than the second maximum span SP2 that allows the position correction in the second direction Z2. For example, the projection lengths in the first direction Z1 of the front slope 61 and the rear slope 62 positioned opposite to each other in the first direction Z1 to implement the position correction in the first direction Z1 may be greater than the projection lengths in the second direction Z2 of the left slope 63 and the right slope 64 positioned opposite to each other in the second direction Z2 to implement the position correction in the second direction Z2. The front slope 61 and the rear slope 62 are formed at substantially the same height (e.g., the height from the top 60t to the bottom 60b) as the left slope 63 and the right slope 64 in the third direction Z3 that intersects the first and second directions Z1 and Z2. That the first projection length (or the first maximum span SP1) projected in the first direction Z1 from the front slope 61 and the rear slope 62 is greater than the second projection length (or the second maximum span SP2) projected in the second direction Z2 from the left slope 63 and the right slope 64 may mean that the sloped angle of the front slope 61 and the rear slope 62 opposite to each other in the first direction Z1 is less than the sloped angle of the left slope 63 and the right slope 64 opposite to each other in the second direction Z2. This means that the front slope 61 and the rear slope 62 opposite to each other in the first direction Z1 rise relatively gently over the height from the bottom 60b to the top 60t and may also mean that the left slope 63 and the right slope 64 opposite to each other in the second direction Z2 rise relatively sharply over the height from the bottom 60b to the top 60t.

That the first maximum span SP1, which allows the position correction in the first direction Z1, is set greater than the second maximum span SP2, which allows the position correction in the second direction Z2, may mean that the position correction in the first direction Z1 is much more needed to align the bus bar B where the second position alignment guide P2 is formed with the first position alignment guide P1. Considering the arrangement direction of the battery cells 10 arranged in the first direction Z1 and the ductility of the wiring board 20 arranged with the first direction Z1 as the longitudinal direction, the wiring board 20 including the electrical connection with the battery cells 10 is constrained in the first direction Z1 for each battery cell 10 to correspond to the position of the battery cells 10 arranged in the first direction Z1. It may be necessary to forcibly move the outer portion BO of the bus bar B integrated into the wiring board 20 to the correct position on the end block 50 while constraining the position of the wiring board 20 for each battery cell 10 in the first direction Z1. The first maximum span SP1 allowing the position correction in the first direction Z1 may be designed to be greater than the second maximum span SP2 allowing the position correction in the second direction Z2 in that the deformation in the first direction Z1 of the wiring board 20 arranged in the first direction Z1 as the longitudinal direction does not cause unreasonable strain on the wiring board 20 (e.g., excessive strain that causes damage to the wiring board 20).

Although the position correction in the first direction Z1 does not cause unreasonable strain on the wiring board 20 arranged in the first direction Z1 as the longitudinal direction and in second direction Z2 intersecting the first direction Z1 as the width direction, the position correction in the second direction Z2 may cause relatively unreasonable strain on the wiring board 20. For example, although uniform stretching compression strain occurs in the entire wiring board 20 due to temperature changes, the relatively greater position correction in the first direction Z1 as the longitudinal direction of the wiring board 20 may be allowed in that the stretching compression in the first direction Z1 as the longitudinal direction is relatively greater (more position correction is required in the first direction Z1) than that in the second direction Z2. In this regard, the first maximum span SP1 allowing the position correction in the first direction Z1 may be set greater than the second maximum span SP2 allowing the position correction in the second direction Z2.

In the fitting direction where the second position alignment guide P2 is fitted to the first position alignment guide P1, the top 60t of the first position alignment guide P1 may have a relatively small area where the fitting of the second position alignment guide P2 begins. The bottom 60b of the first position alignment guide P1 may have a relatively large area where the fitting of the second position alignment guide P2 ends. The top 60t and the bottom 60b may have a rectangular shape with long sides and short sides in the first and second directions Z1 and Z2, respectively, on the planes in the first and second directions Z1 and Z2. The long side formed in the first direction Z1 may be accumulated in the third direction Z3 to form the relatively short left slope 63 and right slope 64 opposite to each other in the second direction Z2 and the short side formed in the second direction Z2 may be accumulated in the third direction Z3 to form the relatively long front slope 61 and rear slope 62 opposite to each other in the first direction Z1. The long side extending in the first direction Z1 may correspond to the first projection length (the first maximum span SP1) of the front slope 61 and the rear slope 62 opposite to each other in the first direction Z1 and the short side extending in the second direction Z2 may correspond to the second projection length (the second maximum span SP2) of the left slope 63 and the right slope 64 opposite to each other in the second direction Z2. The first projection length in the first direction Z1 of the front slope 61 and the rear slope 62 opposite to each other in the first direction Z1 may correspond to the first maximum span SP1 that is allowed in the first direction Z1 and the second projection length in the second direction Z2 of the left slope 63 and the right slope 64 opposite to each other in the second direction Z2 may correspond to the second maximum span SP2 that is allowed in second direction Z2.

The first position alignment guide P1 may be formed between the pair of nut members 80 that are adjacent to each other on the end block 50. For example, the first position alignment guide P1 may be formed between the pair of nut members 80 adjacent to each other along the width of the end block 50 extending across the battery cells 10 in the second direction Z2. As the first position alignment guide P1 is configured to form a uniform fastening pressure between the fastening members 90 and the nut members 80 along the periphery of the fastening lines L projected vertically from the nut members 80 through the fastening force formed between the fastening members 90 and the nut members 80, the first position alignment guide P1 may be formed at a central position between the nut members 80 that are adjacent to each other in the second direction Z2.

The second position alignment guide P2 may be in the form of a through hole. The second position alignment guide P2 may be fitted onto the first position alignment guide P1 that is in the form of a protrusion 60. According to embodiments of the present disclosure, the first and second position alignment guides P1 and P2 may be formed to be aligned with each other. The first and second position alignment guides P1 and P2 may be tightly fitted to be aligned with each other. For example, the first and second position alignment guides P1 and P2 may be tightly fitted to each other while forming close contact with each other to firmly position and align the second position alignment guide P2 with the first position alignment guide P1. That the first and second position alignment guides P1 and P2 are formed to be aligned with each other means that they are aligned on the end block 50 where the first and second positioning guides P1 and P2 form a tight fit, close contact, or interference fit with each other. The first and second positioning guides P1 and P2 may be formed in a shape and scale in which the first and second positioning guides P1 and P2 are aligned on the end block 50 where the first and second positioning guides P1 and P2 form a close contact or interference fit with each other. The second position alignment guide P2 may be formed in a shape and scale to be aligned with the bottom surface of the first position alignment guide P1 in contact with the end block 50. Although the second position alignment guide P2 is formed in the shape and scale to be aligned with the bottom surface of the first position alignment guide P1 to form a close fit or close contact with the bottom surface of the first position alignment guide P1 in contact with the end block 50, the second position alignment guide P2 may be loosely fitted to the top surface of the first position alignment guide P2. In this regard, the second position alignment guide P2 may be formed in the shape and scale to be aligned with the bottom surface of the first position alignment guide P1 but may not be formed in a shape and scale to be aligned with the top surface of the first position alignment guide P1. The second position alignment guide P2 may have a greater penetration area than the top 60t of the first position alignment guide P1 and may have the same penetration area as the bottom 60b of the first position alignment guide P1.

The first position alignment guide P1 may be formed in the shape of a truncated rectangular pyramid having the bottom 60b in contact with the end block 50, the top 60t opposite to the bottom 60b in the third direction Z3 intersecting the first and second directions Z1 and Z2, and four slopes 60S connecting the bottom 60b to the top 60t. More specifically, the first position alignment guide P1 may include the front slope 61 and the rear slope 62 opposite to each other in the first direction Z1 and the left slope 63 and the right slope 64 opposite to each other in the second direction Z2. As described above, through the front slope 61 and the rear slope 62 opposite to each other in the first direction Z1, the second position alignment guide P2 may be forcibly moved toward the first position alignment guide P1 in the first direction Z1. Through the left slope 63 and the right slope 64 opposite to each other in the second direction Z2, the second position alignment guide P2 may be forcibly moved toward the first position alignment guide P1 in the second direction Z2.

Through the four slopes 60S of the first position alignment guide P1, more specifically, through the front slope 61 and the rear slope 62 opposite to each other in the first direction Z1 and the left slope 63 and the right slope 64 opposite to each other in the second direction Z2, the first and second position alignment guides P1 and P2 may be forcibly moved in the first and second directions Z1 and Z2. The first position alignment guide P1 may be formed in the shape of a truncated rectangular pyramid having four slopes 60S that face each other in the first and second directions Z1 and Z2 to connect the bottom 60b to the top 60t that face each other in the third direction Z3. As described above, according to embodiments of the present disclosure, the four slopes 60S may provide different first and second maximum spans SP1 and SP2. The first maximum span SP1, which can be measured by a first projection length in the first direction Z1 of the front slope 61 and the rear slope 62, may be set greater than the second maximum span SP2, which can be measured by a second projection length in the second direction Z2 of the left slope 63 and the right slope 64. The plane of the first position alignment guide P1 in the first and second directions Z1 and Z2 may be formed as a rectangular plane with the long and short sides in the first and second directions Z1 and Z2. Overall, the first position alignment guide P1 may be formed in the shape of a truncated rectangular pyramid. The second position alignment guide P2 may be formed in a shape and scale to be aligned with the bottom 60b of the first position alignment guide P1 in contact with the end block 50 and may include a rectangular through hole with long and short sides in the first and second directions Z1 and Z2, respectively, so as to be aligned with the bottom 60b of the first position alignment guide P1.

The first and second position alignment guides P1 and P2 may be fitted to each other in the third direction Z3 as the fitting direction. The first and second position alignment guides P1 and P2 may be loosely fitted at the position of the top 60t of the first position alignment guide P1 where the fitting thereof in the third direction Z3 begins and may be tightly fitted at the position of the bottom 60b of the first position alignment guide P1 where fitting thereof in the third direction Z3 ends.

the bus bar B may extend from the battery cells 10 opposite to each other for the electrical connection of the plurality of battery cells 10 onto the upper surface of the end block 50 and may be seated on the upper surface of the end block 50 through the outer portion BO of the bus bar B bent to face the upper surface of the end block 50. The bus bar B seated on the upper surface of the end block 50 may be fastened to the upper surface of the end block 50 through the fastening members 90 penetrating the bus bar B, and the fastening members 90 may be fastened to the nut members 80 formed on the upper surface of the end block 50. The position of the bus bar B between the fastening members 90 and the nut members 80 may be firmly fixed through the coupling of the fastening members 90 to the nut members 80. As the second connection member C2 forming the electrical connection with the bus bar together with the bus bar B is provided between the fastening members 90 and the nut members 80, the bus bar B may form close conductive contact or connection with the second connection member C2. Through the first and second position alignment guides P1 and P2, the bus bar B2, and the second connection member C2 may form a relatively large conductive area under the uniform fastening pressure. The battery pack may form an electrical connection with another battery pack to provide high-voltage, high-output power and may provide high-voltage, high-output power by connecting the bus bars B of different battery packs to each other. The bus bars B of adjacent battery packs may be connected to each other via the second connection member C2. The bus bar B of the first battery pack 101 may be drawn onto the end block 50 of the corresponding first battery pack 101 and the bus bar B of the neighboring second battery pack 102 may be drawn onto the end block 50 of the second battery pack 102. As the second connection member C2 extends across the end blocks 50 of the first and second battery packs 101 and 102, the second connection member C2 may connect the bus bars B drawn onto the end blocks 50 of the first and second battery packs 101 and 102 to each other.

Different first and second bus bars B1 and B2 may be connected to the first and second battery cells 11 and 12 opposite to each other in an electrical connection direction of the plurality of battery cells 10, which are electrically connected to each other to form the battery pack. The parallel module PM including a parallel connection of a group of first battery cells 11 connected at one end may be connected with the first bus bar B1 in the electrical connection direction of the battery cells 10. The parallel module PM, which includes a parallel connection of a group of second battery cells 12 connected at the other end, may be connected to the second bus bar B2 in the electrical connection direction of the battery cells 10. The outer portions BO of the first and second bus bars B1 and B2 may be positioned on the end blocks 50 at both ends in the first direction Z1 where the plurality of battery cells 10 are arranged and may be positioned on the end blocks 50 at a position outside the cell area CA. The pair of nut members 80 on the end block 50 in the width direction of the end block 50 (corresponding to the second direction Z2) extending across the battery cells 10 and the first position alignment guide P1 formed between the pair of nut members 80 may be formed at an eccentric position biased to one side or the other side with respect to the central position in the width direction of the end block 50. On the end block 50 where the outer portions BO of the first and second bus bars B1 and B2 are respectively arranged, a series of components providing fastening points where the outer portions BO of the first and second bus bars B1 and B2 are fastened, i.e., components involved in fastening the outer portions BO of the first and second bus bars B1 and B2 (more specifically, the pair of nut members 80 and the first position alignment guide P1 formed between the pair of nut members 80) may be biased from the central position to one side or the other side in the width direction of the end block 50 in the second direction Z2. The components involved in fastening the first and second bus bars B1 and B2 may be arranged in a diagonal direction that simultaneously follows the first and second directions Z1 and Z2 in the battery pack package so that the first and second directions Z1 and Z2 are the long and short sides, respectively. For the electrical connection of the plurality of battery cells 10 forming the battery pack, the first and second bus bars B1 and B2 connected to the first and second battery cells 11 and 12 opposite to each other and a series of components involved in fastening the first and second bus bars B1 and B2 (e.g., the pair of nut members 80 and the first position alignment guide P1 between the pair of nut members 80) may be arranged in the diagonal direction that simultaneously follows the first and second directions Z1 and Z2 that form the long and short sides of the battery pack, respectively.

The fastening points where the outer portions BO of the bus bar B are fastened to the second connection members C2 may be formed at the eccentric position in the width direction (second direction Z2) of the end block 50 to shorten the electrical connection length (corresponding to the length of the second connection member C2) between battery packs that are electrically connected to each other to provide high voltage and high output. By orienting the different battery packs (first and second battery packs 101 and 102) to be connected so that they are left and right reversed in the second direction Z2 to position the fastening points adjacent to each other in the second direction Z2 between the adjacent battery packs in the second direction Z2, the length of the second connection member C2 connecting the fastening points may be shortened through the fastening points that are eccentric toward each other in the second direction Z2.

According to the disclosure, a battery pack is provided in which a connection member is aligned with a bus bar to form a charge and discharge path for a group of battery cells forming the battery pack and a large conductive area between the bus bar and the connection member is provided to form a uniform contact resistance. Thus, overall electrical resistance is reduced, Joule heating is suppressed, and there is a reduced risk of accidents such as ignition and explosion due to the local Joule heating in a small conductive area.

The embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure.

## Claims

1. A battery pack comprising:
a plurality of battery cells (10) arranged inside a cell area (CA) in a first direction (Z1);
a bus bar (B, B2) comprising an inner portion (BI) formed at a location inside the cell area (CA), an outer portion (BO) formed at a location outside the cell area (CA), and a connecting portion (BC) that connects the inner portion (BI) to the outer portion (BO);
fastening members (90) fastened to nut members (80) on an end block positioned at a position outside the cell area (CA), each of the fastening members (90) passing through a through hole (B') formed on the outer portion (BO) of the bus bar (B, B2); and
position alignment guides (P1, P2) that align the through holes (B') of the bus bar (B, B2) and the nut members (80) on the end block.

2. The battery pack as claimed in claim 1, wherein the inner portion (BI) of the bus bar (B, B2) is electrically connected to a first battery cell (11) or a second battery cell (12) positioned opposite to each other in a direction where the battery cells (10) are connected and the outer portion (BO) of the bus bar (B, B2) is connected to a second connection member (C2) such that the bus bar (B, B2) forms a charge and discharge path for the plurality of battery cells (10).

3. The battery pack as claimed in claim 1 or 2, further comprising a wiring board (20) to which the inner portion (BI) of the bus bar (B, B2) and a connection member (80) for electrically connecting the plurality of battery cells (10) are coupled.

4. The battery pack as claimed in claim 3, wherein the wiring board (20) extends in the first direction (Z1) and in a second direction (Z2) intersecting the first direction (Z1), and the wiring board (20) faces the plurality of battery cells (10) in a third direction (Z3) intersecting the first and second directions (Z2), wherein the first direction (Z1) is a long side direction and the second direction (Z2) is a short side direction.

5. The battery pack as claimed in claims 1 to 4, wherein the position alignment guides (P1, P2) comprise a first position alignment guide (P1) formed on the end block (50) and a second position alignment guide (P2) formed on the bus bar, and
wherein the first and second position alignment guides (P1, P2) are fitted to each other in a third direction (Z3) intersecting the first direction (Z1) and a second direction (Z2) in which electrode terminals (10a, 10b) of the battery cell (10) are arranged.

6. The battery pack as claimed in claim 5, wherein the first position alignment guide (P1) is formed on the end block (50) between the nut members (80) and the second position alignment guide (P2) is formed on the bus bar (B, B2) between the through holes.

7. The battery pack as claimed in claim 5 or 6, wherein the first and second position alignment guides (P1, P2) are fitted to each other in the third direction (Z3) intersecting the first and second directions (Z1, Z2), and a wiring board (20) to which the inner portion (BI) of the bus bar (B, B2) is coupled extends in the first and second directions (Z1, Z2),
wherein the first position alignment guide (P1) comprises a protrusion protruding from the end block (50) in the third direction (Z3), and
wherein the second position alignment guide (P2) comprises a through hole (B') formed in the bus bar.

8. The battery pack as claimed in claims 5 to 7, wherein the first position alignment guide (P1) is formed in the shape of a truncated rectangular pyramid, with the first position alignment guide (P1) having a rounded top that is narrow in a cross-sectional plane at the top, and with the first position alignment guide (P1) being wide in a cross-sectional plane at a base of the first position alignment guide (P1).

9. The battery pack as claimed in claims 5 to 7, wherein the first position alignment guide (P1) comprises:
a wide bottom in contact with the end block (50);
a narrow top in a third direction (Z3) that intersects the first and second directions (Z1, Z2); and
slopes (60S) connecting the wide bottom to the narrow top.

10. The battery pack as claimed in claim 9, wherein the top and the bottom of the first position alignment guide (P1) and sections between the top and the bottom of the first position alignment guide (P1) each have a shape of a rectangular plane in cross-section with a long side extending in the first direction (Z1) where the plurality of battery cells (10) are arranged or in the second direction (Z2) where the electrode terminals (10a, 10b) of each battery cell (10) are arranged and with a short side extending in the second direction (Z2) or in the first direction (Z1).

11. The battery pack as claimed in claim 9 or 10, wherein the top and the bottom of the first position alignment guide (P1) and sections between the top and the bottom of the first position alignment guide (P1) each have a shape of a rectangular plane in cross-section with the long side extending in the first direction (Z1) where a long side of the wiring board (20) to which the inner portion (BI) of the bus bar (B, B2) is coupled extends or the second direction (Z2) where a short side of the wiring board (20) to which the inner portion (BI) of the bus bar (B, B2) is coupled extends and with the short side extending in the second direction (Z2) or the first direction (Z1).

12. The battery pack as claimed in claims 9 to 11, wherein the second position alignment guide (P2) is configured to pass by the top of the first position alignment guide (P1) and move along the slopes (60S) of the first position alignment guide (P1) from the narrow top to the wide bottom, and wherein the second position alignment guide (P2) is configured to be loosely fitted to the first position alignment guide (P1) at the narrow top and tightly fitted to the first position alignment guide (P1) at the wide bottom to thereby align the first position alignment guide (P1) and the second position alignment guide (P2).

13. The battery pack as claimed in claims 9 to 12, wherein the slopes (60S) include a front slope (61) and a rear slope (62) positioned opposite to each other in the first direction (Z1), each of the front slope (61) and the rear slope (62) comprising gentle slopes (60S) with long sides in the first direction (Z1), and wherein the slopes (60S) include a left slope (63) and a right slope (64) positioned opposite to each other in the second direction (Z2), each of the left slope (63) and the right slope (64) comprising steep slopes (60S) with short sides in the second direction (Z2) and/ or wherein a projection length of each of the front slope (61) and the rear slope (62) is a first maximum span (SP1) such that the first position alignment guide (P1) forcibly corrects the position of the second position alignment guide (P2) in the first direction (Z1) and/or wherein a projection length of each of the left slope (63) and the right slope (64) is a second maximum span (SP2) such that the first position alignment guide (P1) forcibly corrects the position of the second position alignment guide (P2) in the second direction (Z2) and/or wherein the first maximum span (SP1) is greater than the second maximum span.

14. The battery pack as claimed in claims 1 to 13, wherein the inner portion (BI) of the bus bar (B, B2) extends to a position inside the cell area (CA) to form an electrical connection with a group of battery cells (10) forming a parallel module with the first and second battery cells (12) positioned opposite to each other in a direction where the battery cells (10) are connected, and the outer portion (BO) of the bus bar (B, B2) is positioned on the end block (50) at a position outside the cell area (CA) and extends in the first direction (Z1), and wherein the inner portion (BI) is longer than the outer portion (BO) and/or wherein the plurality of battery cells (10) of the parallel module comprising a group of battery cells (10) that are connected in parallel in the first direction (Z1) as one unit and are arranged so that orientations of electrode terminals (10a, 10b) of the battery cells (10) are alternated left and right in the second direction (Z2) intersecting the first direction (Z1).

15. The battery pack as claimed in claims 1 to 14, wherein the connecting portion (BC) of the bus bar (B, B2) is a stepped structure connecting the inner portion (BI) to the outer portion (BO) of the bus bar (B, B2) that are located at different levels in the third direction (Z3).
